# FASCICULE DE BREVET EUROPEEN

(11) **EP 2 882 573 B1**
(45) Date de publication et mention de la délivrance du brevet: **31.08.2016**
(21) Numéro de dépôt: 13745808.9
(22) Date de dépôt: 29.07.2013
(51) Int. Cl.: B25J 9/16

(54) **PROCEDE ET SYSTEME D'ASSISTANCE AU PILOTAGE D'UN ROBOT A FONCTION DE DETECTION D'INTENTION D'UN OPERATEUR**
VERFAHREN UND SYSTEM ZUR UNTERSTÜTZUNG BEI EINER ROBOTERSTEUERUNG MIT EINER FUNKTION ZUR ERKENNUNG DER ABSICHT EINES BEDIENERS
METHOD AND SYSTEM FOR ASSISTING IN ROBOT CONTROL, HAVING A FUNCTION FOR DETECTING THE INTENTION OF AN OPERATOR

(30) Priorité: 10.08.2012 FR 1257755
(43) Date de publication de la demande: 17.06.2015
(73) Titulaire: Commissariat à l'Énergie Atomique et aux Énergies Alternatives, 75015 Paris (FR)
(72) Inventeur: DUMORA, Julie, F-75014 Paris (FR); GEFFARD, Franck, F-91400 Orsay (FR)
(74) Mandataire: Hammes, Pierre
(86) Numéro de dépôt international: PCT/EP2013/065860
(87) Numéro de publication internationale: WO 2014/023591

(56) Documents cités:
- FR-A1- 2 962 063
- US-A1- 2001 005 120
- US-A1- 2011 040 411

## Description

La présente invention concerne un procédé d'assistance au pilotage d'un robot à fonction de détection d'intention d'un opérateur, ainsi qu'un système d'assistance au pilotage d'un robot mettant en oeuvre un tel procédé. La présente invention s'applique notamment au pilotage de robots industriels dédiés au déplacement et au positionnement de charges lourdes et encombrantes, pour lesquels des moyens de pilotage sont déportés par rapport à un bras manipulateur.

Des robots industriels permettent de déplacer un objet dans l'espace, suivant un certain nombre de degrés de liberté de ce dernier. De tels robots assurent le déplacement de pièces, typiquement trop lourdes ou trop encombrantes pour pouvoir être déplacées par un opérateur humain, par exemple dans des lignes de fabrication. De tels robots peuvent également assurer le positionnement précis de ces pièces, par exemple pour assurer des opérations de montage. Toutes les tâches réalisées par des robots industriels ne pouvant être entièrement automatisées, certaines d'entre elles requièrent qu'un opérateur humain assure leur pilotage. D'une manière typique, un robot industriel est un système comprenant une pluralité d'articulations, à l'instar d'un bras humain. Il peut se présenter sous la forme d'un bras manipulateur, équipé à une extrémité d'un organe de préhension apte à saisir la pièce. La pièce peut être orientée spatialement par le robot, par exemple en rotation selon trois axes, et en translation suivant les trois axes précités ; en tout état de cause les mouvements combinés des éléments constituant le robot doivent permettre une manipulation de la pièce permettant de déplacer et orienter celle-ci dans l'espace.

Afin de favoriser une manipulation précise de la pièce, les mouvements de l'organe de préhension du robot peuvent être contraints, de manière à ce que des mouvements involontaires de l'opérateur ne dévient pas la pièce manipulée ; par exemple les déplacements appliqués par le robot peuvent être contraints en translation, ou bien en rotation. Il est dit dans de tels cas que la pièce est déplacée suivant des « guides virtuels », formant autant de types d'assistance à l'opérateur. La présente invention s'inscrit dans le cadre de robots offrant des assistances telles que des guides virtuels.

Différents systèmes de pilotage de robots existent. Il existe notamment des systèmes de pilotage connus grâce auxquels l'opérateur peut interagir directement avec le robot, par exemple par l'intermédiaire d'une poignée de commande fixée au niveau de l'organe de préhension du robot, et permettant à l'opérateur de mettre celui-ci en mouvement comme décrit dans la référence FR-A1- 2 962 063. De la sorte la pièce peut être manipulée suivant ses six degrés de liberté, le poids de la pièce pouvant être strictement compensé. Cependant, plus particulièrement lorsque l'opérateur doit manipuler avec précision une pièce de grandes dimensions, il peut lui être difficile de piloter le robot uniquement au moyen d'une poignée de commande fixée à une extrémité du bras du robot. Il peut non seulement s'avérer indispensable pour l'opérateur de saisir un emplacement particulier de la pièce pour pouvoir la manipuler d'une certaine façon, mais encore la poignée fixe sur le robot peut devenir inatteignable par l'opérateur lorsque le robot doit saisir seul une pièce de grandes dimensions.

Dans le but de résoudre ces inconvénients, des systèmes de pilotage ont été conçus, permettant à un opérateur d'interagir avec une pièce à manipuler par le biais de la pièce elle-même, par un organe de pilotage déporté du robot et permettant une interaction directe avec la pièce, situé à une extrémité de la pièce. Un tel système de pilotage est décrit dans la demande de brevet japonais publiée sous la référence JP 2008/213119. Dans ce système de pilotage, une poignée distante du robot peut être disposée à un endroit prédéterminé d'un cadre supportant la pièce à manipuler.

Selon une autre technique, décrite dans la demande de brevet déposée sous la référence FR 11/61402, des moyens de pilotage peuvent être fixés de manière amovibles par l'opérateur à des endroits souhaités de la pièce à manipuler.

Un inconvénient de systèmes dans lesquels les efforts appliqués par l'opérateur humain sont appliqués à distance du robot, est lié au fait que les efforts appliqués par l'opérateur au point de saisie de la pièce sont différents des efforts ressentis par l'organe de préhension du robot, pouvant impliquer des ambigüités entre différents mouvements, par exemple de rotation et de translation. Par exemple, dans une configuration où l'opérateur et l'organe de préhension du robot saisissent chaque extrémité d'une pièce, par exemple une planche, l'effort ressenti au niveau de l'organe de préhension du robot s'assimile à un couple, que l'opérateur souhaite faire pivoter la pièce autour de l'effecteur du robot, ou bien que celui-ci souhaite la translater. Il existe ainsi une ambigüité quant à l'interprétation des efforts appliqués par l'opérateur.

Pour pallier ces inconvénients, des solutions ont été proposées. Par exemple, dans le but de résoudre une ambigüité rotation / translation, il est possible pour l'opérateur de simplement appliquer un couple élevé autour de son point de saisie. Cependant en agissant de la sorte, l'opérateur perd l'intérêt de l'assistance procurée par le robot, car l'application d'un couple élevé lui impose d'exercer un effort sur la pièce à manipuler à proximité de son point de saisie, mais également à proximité de l'organe de préhension du robot ; en effet, l'opérateur doit alors appliquer un effort pour déplacer le côté de la pièce tenue par le robot en plus de l'effort appliqué pour déplacer son côté de la pièce. Ainsi, le robot devient une contrainte supplémentaire pour l'opérateur, qui doit compenser le moment d'inertie généré par la longueur de l'objet à manipuler et l'inertie du robot.

Selon des techniques connues plus élaborées, partant de l'hypothèse que le robot n'a aucune connaissance a priori des tâches à réaliser et de l'environnement, l'inconvénient précité peut être contourné par la définition de contraintes dites « non-holonomiques » sur le robot, permettant d'interdire une translation ou une rotation de l'objet manipulé. De telles techniques présentent l'inconvénient d'imposer à l'opérateur des efforts fastidieux et non intuitifs, par exemple une série de mouvements successifs à imposer à la pièce en raison d'une interdiction d'un mouvement de l'objet manipulé suivant un degré de liberté non autorisé. Il s'avère cependant que le fait de conserver les redondances de mouvements préserve la capacité à permettre à l'opérateur de réaliser rapidement et efficacement des tâches complexes. En outre, dans des environnements plus confinés, le fait de préserver l'holonomie des mouvements possibles assure que quelle que soit la configuration, dans la mesure où il existe un chemin suivant lequel la pièce peut être déplacée ainsi que cela est souhaité, que ce déplacement puisse être effectué. En revanche, un tel déplacement peut être rendu impossible en raison de déplacements non autorisés dans le cadre de méthodes impliquant des contraintes non-holonomiques.

Selon des techniques connues alternatives, il a été proposé que l'opérateur utilise des instructions vocales pour dicter au robot ses intentions et lever les possibles ambigüités. De telles techniques présentent l'inconvénient de requérir des systèmes complexes de reconnaissance vocale, s'avérant peu robustes, notamment dans des environnements industriels souvent bruyants. En outre, de telles techniques introduisent un retard significatif entre la prise de décision de l'opérateur et la réalisation du mouvement par le robot. Egalement, de telles techniques présentent l'inconvénient de ne pas être universelles : en effet les instructions vocales doivent être reconnues, et notamment énoncées dans une langue reconnue par le système. En outre selon de telles techniques, l'opérateur doit de plus spécifier le référentiel dans lequel ses instructions sont données.

Ainsi, il est nécessaire qu'un robot d'assistance, notamment pour des applications requérant le déplacement de pièces encombrantes, permette le mouvement holonomique de la pièce à manipuler, tout en participant activement aux mouvements, afin que l'opérateur n'ait pas à appliquer d'efforts trop importants.

Un but de la présente invention est de pallier les inconvénients propres aux solutions connues précitées, en proposant un procédé et un système d'assistance au pilotage d'un robot collaboratif permettant d'ajouter de nouvelles fonctionnalités à ce dernier, dans des applications où l'opérateur est déporté par rapport au robot et en interaction directe avec la pièce manipulée, en procurant à l'opérateur tout au long de la tâche qu'il doit réaliser une assistance à la manipulation adaptée afin qu'il applique un minimum d'efforts et que les mouvements de la pièce soient plus précis.

Un avantage de l'invention est lié au fait que l'opérateur n'est pas explicitement sollicité pour piloter le robot à l'aide d'un autre canal, tel qu'une commande vocale ; ainsi l'opérateur peut se concentrer exclusivement sur la manipulation de la pièce. En outre la solution proposée par la présente invention est universelle, dans le sens où elle ne dépend pas par exemple de la langue pratiquée par l'opérateur.

Un autre avantage de l'invention est que le nombre de mouvements de la pièce à manipuler réalisables n'est pas limité, n'obligeant pas l'opérateur à combiner différents mouvements pour que la pièce atteigne une position que seul un mouvement interdit par le robot lui autoriserait. Grâce à la solution proposée par la présente invention, le nombre d'assistances au mouvement proposées par le robot peut être augmenté, et il est permis au robot de s'adapter aux mouvements de l'opérateur, contrairement aux solutions connues dans lesquelles l'opérateur est contraint de s'adapter aux mouvements autorisés par le robot.

A cet effet, l'invention a pour objet un procédé d'assistance au pilotage d'un robot comprenant un organe de préhension apte à tenir une pièce à manipuler en un point de préhension, par un opérateur agissant sur la pièce en au moins un point de saisie, le procédé d'assistance permettant au robot d'exécuter une pluralité de types d'assistance, correspondant à une pluralité de mouvements caractéristiques déterminés de l'organe de préhension, le procédé étant caractérisé en ce qu'il comprend au moins :
- une première étape de détection de l'intention de l'opérateur déterminant l'intention de l'opérateur d'exécuter un type d'assistance déterminé parmi la pluralité de types d'assistance, à partir d'une analyse d'un torseur d'effort et d'un torseur cinématique réduits en un point déterminé et de la connaissance d'un type d'assistance courant exécuté par le robot ;
- une seconde étape d'activation d'une assistance que le robot doit exécuter en fonction de l'intention détectée à la première étape, la seconde étape restituant des consignes de contrôle à l'attention du robot.

Dans un mode de réalisation de l'invention, l'opérateur peut agir sur la pièce par des moyens de pilotage disposés sur la pièce.

Dans un mode de réalisation de l'invention, le point déterminé de réduction du torseur d'effort et du torseur cinématique peut être situé au niveau du point de saisie.

Dans un mode de réalisation de l'invention, le procédé d'assistance peut comprendre en outre une étape préalable comprenant la définition d'une pluralité de mouvements de la pièce pouvant être réalisés, la définition des types d'assistance requis pour l'exécution de la pluralité de mouvements, et la définition de contrôleurs générant des consignes de contrôle à appliquer pour l'exécution des types d'assistance définis.

Dans un mode de réalisation de l'invention, ladite pluralité de types d'assistance peut être un groupe comprenant au moins l'un des types d'assistance parmi :
- un premier type d'assistance permettant à l'opérateur d'effectuer un mouvement du côté de la pièce tenu par le robot au point de préhension non coordonné avec un mouvement du côté de la pièce tenu par l'opérateur au point de saisie sans appliquer de couple ;
- un deuxième type d'assistance permettant à l'opérateur d'effectuer un mouvement du côté de la pièce tenu par le robot au point de préhension coordonné avec un mouvement du côté de la pièce tenu par l'opérateur au point de saisie sans appliquer de couple ;
- un troisième type d'assistance permettant à l'opérateur d'effectuer un mouvement de rotation de la pièce ;
- un quatrième type d'assistance permettant à l'opérateur d'effectuer un mouvement en ligne droite de la pièce.

Dans un mode de réalisation de l'invention, le premier type d'assistance précité peut correspondre à un mouvement de rotation de la pièce autour d'une position déterminée du point de saisie.

Dans un mode de réalisation de l'invention, le deuxième type d'assistance précité peut correspondre à un mouvement de translation de la pièce selon lequel l'orientation de la pièce demeure parallèle à une position d'origine de la droite passant par le point de saisie et le point de préhension.

Dans un mode de réalisation de l'invention, le troisième type d'assistance précité peut correspondre à une rotation de la pièce autour du point de préhension.

Dans un mode de réalisation de l'invention, le quatrième type d'assistance précité peut correspondre à un mouvement de translation de la pièce le long de la droite passant par le point de saisie et le point de préhension.

Dans un mode de réalisation de l'invention, la détection d'intention réalisée à la première étape peut être basée sur une analyse comparative des valeurs associées aux paramètres physiques contenus dans les torseurs d'effort et cinématique, l'ensemble des paramètres physiques contenus dans les deux torseurs dont les valeurs caractéristiques dépassent les valeurs de seuils respectives correspondantes déterminant l'intention de l'opérateur, en fonction du type d'assistance courant considéré, en référence à une base de données de référence.

Dans un mode de réalisation de l'invention, les torseurs d'effort et cinématique peuvent être établis à partir de mesures intégrées sur une fenêtre temporelle de durée déterminée.

La présente invention a également pour objet un système d'assistance au pilotage d'un robot caractérisé en ce qu'il est configuré pour mettre en oeuvre un procédé d'assistance au pilotage suivant l'un quelconque des modes de réalisation décrits.

Dans un mode de réalisation de l'invention, un tel système d'assistance peut comprendre des moyens de pilotage comprenant au moins un capteur d'efforts 6 axes permettant la mesure directe du torseur d'effort réduit au niveau du point de saisie.

Dans un mode de réalisation de l'invention, les moyens de pilotage peuvent être formés par une poignée comprenant des moyens de fixation aptes à assurer la fixation de la poignée à la pièce.

Dans un mode de réalisation de l'invention, les moyens de pilotage peuvent comprendre en outre une centrale inertielle permettant la mesure directe du torseur cinématique réduit au niveau du point de saisie.

D'autres caractéristiques et avantages de l'invention apparaîtront à la lecture de la description, donnée à titre d'exemple, faite en regard des dessins annexés qui représentent :
- la figure 1, une vue de profil illustrant un système de pilotage, selon un mode de réalisation de la présente invention ;
- les figures 2A, 2B, 2C et 2D, des vues illustrant de manière synoptique différents mouvements élémentaires de la pièce manipulée par le robot ;
- la figure 3, un logigramme illustrant de manière synoptique le principe d'un procédé d'assistance au pilotage d'un robot selon un exemple de réalisation de l'invention ;
- la figure 4, un logigramme illustrant les étapes d'un procédé d'assistance au pilotage d'un robot selon un exemple de réalisation de l'invention.

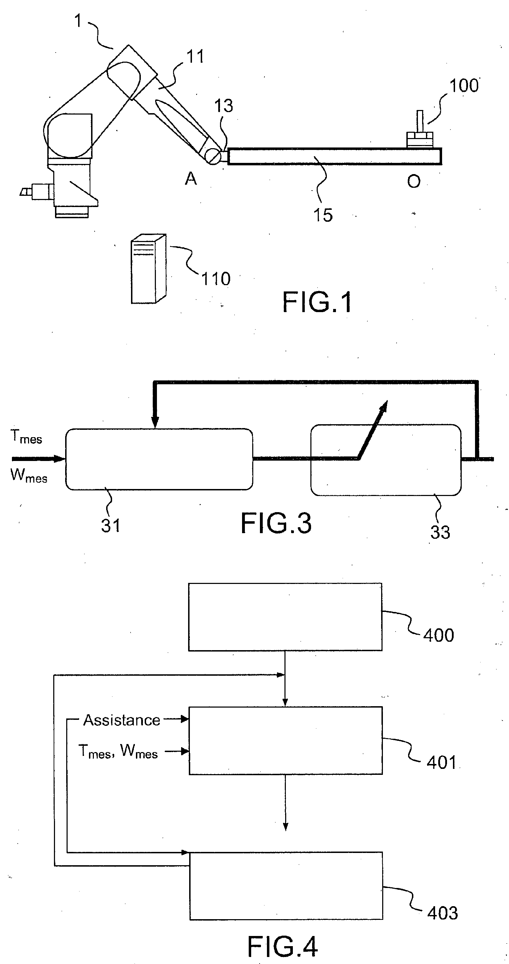

La figure 1 présente un robot 1, comprenant par exemple un bras manipulateur 11 au bout duquel peut être disposé un capteur d'efforts, par exemple suivant six axes de liberté, le capteur étant alors dit « capteur six axes », non représenté sur la figure. Un organe de préhension 13 est disposé en partie terminale du bras manipulateur 11. L'organe de préhension 13 saisit une pièce 15 à manipuler, en un point de préhension A. Des moyens de pilotage, formés par une poignée 100 dans l'exemple illustré par la figure, peuvent être fixés à la pièce 15, en un point de saisie O. La poignée 100 peut être saisie par un opérateur, non représenté sur la figure, et peut à la volonté de celui-ci, être disposée à un endroit souhaité sur la pièce 15.

Dans l'exemple illustré par la figure, la pièce 15 à manipuler est de forme essentiellement plane, à l'instar d'une planche, mais il est entendu que la présente invention permet la manipulation de pièces de formes diverses, même complexes.

Une fois saisi de la poignée 100, l'opérateur peut par exemple imprimer à la pièce 15, par le biais de la poignée 100, des mouvements de déplacement tels qu'il les appliquerait directement sur la pièce, le rôle du robot étant typiquement d'ôter le ressenti du poids de la pièce pour l'opérateur.

Un contrôleur 110 peut délivrer des consignes de commande à destination du robot 1, et mettre en oeuvre des algorithmes d'asservissement se fondant sur des données d'entrée provenant notamment des capteurs compris dans les moyens de pilotage, ainsi que dans le robot 1, ainsi que cela est explicité ci-après. D'une manière plus générale, le contrôleur 110 peut mettre en oeuvre une méthode de pilotage selon l'un des modes de réalisation de l'invention. Il est ainsi à observer que les différentes étapes de procédé décrites ci-après, impliquant notamment la saisie, l'acquisition et le traitement de données peuvent être mises en oeuvre au moyen du contrôleur 110, ou bien de différents contrôleurs dédiés.

Un système de pilotage selon la présente invention peut en outre comprendre des moyens de recueil des données introduites ci-dessus issues des capteurs, ces moyens de recueil pouvant par exemple être compris dans le contrôleur 110.

Le système de pilotage peut comprendre différents capteurs aptes à recueillir des mesures des efforts appliqués au niveau de l'organe de préhension du robot. De tels capteurs sont usuellement ajoutés dans des robots irréversibles ou peu réversibles, largement représentés dans la gamme des robots industriels, amenés à évoluer et être en contact avec leur environnement, y compris avec l'opérateur.

Il est à noter que le capteur d'efforts peut par exemple être un capteur multiaxe situé au niveau de l'organe de préhension du robot. Il est également possible de disposer de capteurs au niveau des articulations du robot, par exemple des capteurs de couple, les mesures réalisées par ces capteurs peuvent alors permettre d'obtenir les mesures d'efforts au niveau de l'organe de préhension du robot. Egalement, des mesures d'efforts peuvent être obtenues à partir de mesures de courants d'alimentation des moteurs des articulations du robot.

Selon une spécificité de la présente invention, les moyens de pilotage, c'est-à-dire la poignée 100 dans l'exemple illustré par la figure, comprennent des moyens pour réaliser des mesures d'efforts appliqués sur ceux-ci.

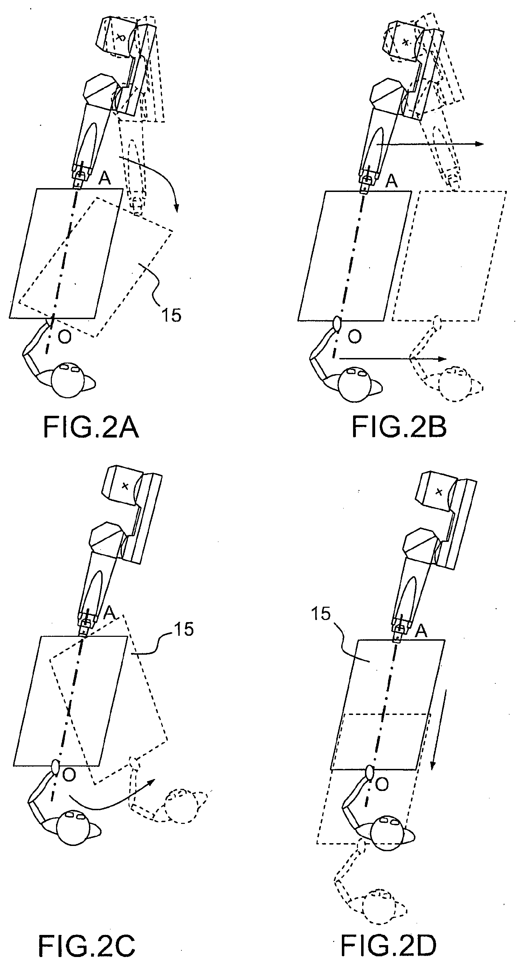

Les figures 2A, 2B, 2C et 2D présentent des vues illustrant de manière synoptique différents mouvements élémentaires de la pièce manipulée par le robot, par exemple tel que le robot décrit précédemment en référence à la figure 1.

Pour la suite, il est proposé, pour illustration, de distinguer quatre types de mouvements élémentaires du point de préhension A de la pièce par le robot. Chacun des quatre types de mouvements correspond à une assistance différente que le robot peut procurer. La droite (AO)₀ passant par le point de saisie O et le point de préhension A à la position initiale de la pièce 15 à manipuler, peut former une référence pertinente pour la décomposition des assistances du robot.

Un premier type d'assistance ou guide virtuel est illustré par la figure 2A, et correspond à un robot exécutant activement un mouvement différent de celui de l'opérateur. Un tel type d'assistance peut être désigné par le sigle UGTA correspondant à la terminologie anglaise « Uncoordinated Generative Torque Assistance », soit « Assistance génératrice d'un couple pour mouvement non coordonné ». L'exemple d'UGTA illustré par la figure 2A correspond à une rotation R₀ de la pièce 15 autour d'une position déterminée du point de saisie par l'opérateur.

Un deuxième type d'assistance est illustré par la figure 2B, et correspond à un robot dont les mouvements suivent activement les mouvements de l'opérateur dans le but de préserver l'orientation de la pièce 15 parallèle à la droite (AO)₀. Un tel type d'assistance peut être désigné par le sigle CGTA correspondant à la terminologie anglaise « Coordinated Generative Torque Assistance », soit « Assistance génératrice d'un couple pour mouvement coordonné ». Dans l'exemple illustré par la figure 2B, le CGTA correspond à un guide virtuel en une translation TY de la pièce, orthogonale à la droite (AO).

Les premier et deuxième types d'assistance UGTA et CGTA précités permettent à l'opérateur d'obtenir un mouvement du côté de la pièce 15 le plus éloigné de celui-ci sans avoir à appliquer un couple au point de saisie O.

Un troisième type d'assistance est illustré par la figure 2C, et correspond à un mouvement de robot maintenant la position du point de préhension A fixe, permettant à l'opérateur de faire pivoter aisément et de manière intuitive la pièce 15 autour du point de préhension A. Un tel type d'assistance peut être désigné par le sigle CGRA correspondant à la terminologie anglaise « Circular Generative Rail Assistance », soit « Assistance génératrice d'un rail circulaire ». L'exemple de CGRA illustré par la figure 2C correspond à un mouvement de rotation R_{A} de la pièce autour du point de préhension A.

Un quatrième type d'assistance est illustré par la figure 2D, et correspond au mouvement d'un robot suivant le mouvement de l'opérateur le long de la droite (AO)₀, préservant ainsi l'orientation de la pièce 15 parallèle à la droite (AO)₀. Un tel type d'assistance peut être désigné par le sigle SGRA correspondant à la terminologie anglaise « Straight Generative Rail Assistance », soit « Assistance génératrice d'un rail droit ». L'exemple de SGRA illustré par la figure 2D correspond à un guide virtuel en translation T_{X} selon la direction de la droite (AO).

Typiquement, à un instant donné, le robot est en cours d'exécution d'un mouvement d'un des quatre types précités, et il est nécessaire que puisse être détectée l'intention de l'opérateur de faire exécuter au robot un mouvement d'un autre type.

En référence à la figure 3, un procédé de détection d'intention de l'opérateur 31 permet la restitution d'une variable représentative de l'intention de l'opérateur. Cette variable d'intention est exploitée par un procédé d'assistance au mouvement 33, appliquant un type de mouvement en fonction de la variable d'intention. Il peut être fait l'hypothèse que si l'assistance courante procurée par le robot est inappropriée, alors l'opérateur varie instinctivement les efforts appliqués aux moyens de pilotage de manière à compenser le phénomène.

Selon la présente invention, il est proposé que la détection d'intention réalisée par le procédé de détection d'intention 31 soit réalisée en considérant des données haptiques propres à l'opérateur, formées par un torseur d'effort Tₘₑₛ et un torseur cinématique Wₘₑₛ ou de déplacement, réduits en un point déterminé, par exemple au point de saisie de l'opérateur.

Par exemple, si l'assistance courante exécutée par le robot est du type CGRA, le comportement du robot s'assimile à un pivot. Si l'opérateur souhaite réaliser un mouvement de rotation de la pièce R_{A} autour du point de saisie A, alors l'assistance courante est l'assistance appropriée en l'espèce, et il peut être considéré que seules des composantes d'efforts très faibles peuvent être mesurées au niveau des moyens de pilotage.

Si l'opérateur souhaite réaliser un mouvement de translation de la pièce 15 selon la direction de la droite (AO), soit une translation T_{X} précitée, alors celui-ci va appliquer un effort le long de la direction x. L'effort appliqué peut alors être mesuré, la force correspondante étant en effet transmise à la liaison pivot de l'organe de préhension du robot.

Si l'opérateur souhaite réaliser un mouvement de rotation R_{O} de la pièce 15 autour du point de saisie O, celui-ci va appliquer un couple M_{Z}. Ce couple peut être mesuré, par exemple au moyen d'un capteur de couple disposé au niveau des moyens de pilotage.

Si l'opérateur souhaite réaliser un mouvement de translation T_{Y} précité, suivant la direction orthogonale à la droite (AO), alors celui-ci va appliquer un couple M_{Z} et un effort F_{Y} suivant la direction y. En pratique, la force y correspondant n'est pas mesurée directement, la liaison pivot de l'organe de préhension du robot autorisant une vitesse V_{Y} au point de saisie O, selon la relation de Varignon. Ainsi, en pratique, seul le couple similaire au couple résultant d'une intention de l'opérateur de réaliser un mouvement de rotation RO sera mesuré. Cependant, un déplacement ΔX_{Y} de la main de l'opérateur suivant la direction y sera également mesuré si l'opérateur souhaite réaliser un mouvement de translation T_{Y}, alors qu'un tel déplacement ne pourra être mesuré dans le cas où l'opérateur souhaite réaliser un mouvement de rotation RO.

Ainsi, lorsque le robot exécute une assistance d'un type donné, il est possible de déterminer quelles sont les intentions de l'opérateur de maintenir la même assistance, ou bien de passer à une assistance d'un type alternatif, par une mesure de l'effort appliqué au niveau des moyens de pilotage, et du déplacement de la main de l'opérateur. En d'autres termes, une connaissance du torseur d'effort et du torseur cinématique, ces torseurs étant réduits en un point déterminé, par exemple situé au niveau des moyens de pilotage, permet de détecter les intentions de l'opérateur.

Pour l'exemple décrit ci-dessus, dans lequel l'assistance courante est du type CGRA, les relations entre les intentions de l'opérateur et le torseur d'effort réduit au point de saisie O peuvent ainsi se formuler dans la première table de relation suivante :

| Intention | F_{X} | F_{Y} | M_{Z} |
|---|---|---|---|
| R_{A} | 0 | 0 | 0 |
| T_{X} | 1 | 0 | 0 |
| R_{O} | 0 | Mz/L ≈ 0 avec L longueur de l'objet | 1 |
| T_{Y} | 0 | Mz/L ≈ 0 avec L longueur de l'objet | 1 |

Dans la première table de relation ci-dessus, le chiffre 1 désigne que le paramètre d'effort mesuré (force ou couple) prend une valeur supérieure à une valeur de seuil ; L désigne la longueur de la pièce. Chaque paramètre peut être assorti d'une valeur de seuil différente, chaque valeur de seuil pouvant être une valeur prédéterminée, ou bien une valeur déterminée, notamment en fonction de la position des moyens de pilotage par rapport à l'organe de préhension du robot, ou plus simplement en fonction de la distance entre le point de saisie O et le point de préhension A.

D'une manière similaire, les relations entre les intentions de l'opérateur et le torseur cinématique réduit au point de saisie O peuvent se formuler dans la seconde table de relation suivante :

| Intention | Déplacement suivant y |
|---|---|
| R_{O} | 0 |
| T_{Y} | 1 |

Les exemples de tables de relation présentés ci-dessus se rapportent à un exemple dans lequel le type d'assistance courant exécuté par le robot est du type CGRA précité.

D'une manière analogue, des tables de relation peuvent être établies pour les configurations dans lesquelles le type d'assistance courant exécuté par le robot est un autre des quatre types précités UCTA, CGTA, SGRA.

Ainsi, la connaissance du type d'assistance courant exécuté par le robot, couplée à la connaissance des torseurs d'effort et cinématique réduits au point de saisie par l'opérateur de la pièce 15, et la comparaison des valeurs associées aux paramètres de force, de couple et de vitesse que ces torseurs contiennent, permettent de déterminer l'intention de l'opérateur de maintenir le type d'assistance courant ou bien d'opter pour un type d'assistance alternatif.

La figure 4, présentant un logigramme illustrant les étapes d'un procédé d'assistance au pilotage d'un robot selon un exemple de réalisation de l'invention, fournit un exemple de décomposition d'un procédé d'assistance au pilotage d'un robot en différentes étapes successives.

Un procédé d'assistance au pilotage peut comprendre une première étape 401 de détection de l'intention de l'opérateur, suivie d'une seconde étape 403 d'activation du type d'assistance que le robot doit exécuter. La détermination de l'intention de l'opérateur réalisée lors de la première étape 401 est basée sur une analyse des données d'entrée comprenant le torseur d'effort Tₘₑₛ réduit au point de saisie par l'opérateur et le torseur cinématique Wₘₑₛ également réduit au point de saisie par l'opérateur, en prenant également en compte le type d'assistance courant exécuté par le robot. Ainsi que cela est décrit précédemment, l'analyse des données d'entrée peut consister en une analyse comparative des paramètres physiques contenus dans les deux torseurs, avec des valeurs de seuil déterminées. L'ensemble des paramètres physiques contenus dans les deux torseurs dont les valeurs caractéristiques dépassent les valeurs de seuils respectives correspondantes, détermine l'intention de l'opérateur, en fonction du type d'assistance courant considéré. L'association d'un type d'assistance avec un ensemble des paramètres physiques peut être défini dans une base de données de référence.

Avantageusement, si les valeurs caractéristiques des paramètres physiques mesurés excèdent les valeurs de seuil déterminées y correspondant pendant au moins une période temporelle déterminée, alors et seulement alors ces mesures peuvent être considérées comme significatives et prises en considération par un procédé selon la présente invention. Ce mode de réalisation présente l'avantage de procurer des mesures plus robustes.

Avantageusement, la période temporelle déterminée peut être choisie de l'ordre de quelques dizaines de millisecondes, par exemple 100 ms ou une valeur sensiblement égale à 100 ms, afin de conférer aux mesures à la fois une robustesse et une dynamique satisfaisantes.

Il est à observer que tout autre algorithme de reconnaissance de signaux pourra être avantageusement utilisé en lieu et place des seuils.

Lorsque l'intention de l'opérateur est déterminée lors de la première étape 401, une variable représentative de l'intention de l'opérateur peut constituer la donnée d'entrée de la seconde étape 403, générant les consignes de commande à l'attention du robot, en fonction de la variable représentative de l'intention de l'opérateur.

Les torseurs d'effort et cinématique réduits au niveau du point de saisie peuvent être rendus disponibles et mis à jour en temps réel, par exemple en étant déterminés sur une base périodique à une fréquence élevée.

Les première et seconde étapes 401,403 précitées peuvent être précédées d'une étape préalable 400, lors de laquelle sont définis les mouvements de l'objet qu'il peut être souhaitable de réaliser. Cette définition comprend par exemple la signification que certains mouvements sont autorisés ou prohibés, ou encore que certains enchaînements de mouvements différents sont autorisés ou prohibés. Cette définition peut être prédéfinie, ou bien peut être réalisée par l'opérateur au préalable des manipulations, au moyen de moyens d'entrée appropriés.

L'étape préalable 400 comprend également la définition des types d'assistance procurés par le robot dont l'opérateur a besoin pour l'exécution des mouvements ainsi définis.

L'étape préalable 400 comprend également la définition des contrôleurs générant les consignes de contrôle à adresser au robot pour l'exécution des types d'assistance nécessaires.

Il est à observer que la mise en oeuvre d'un procédé d'assistance au pilotage selon la présente invention requiert la connaissance des torseurs d'effort et cinématique réduits au point de saisie de la pièce à manipuler par l'opérateur. En pratique, le torseur d'effort réduit au point de saisie peut être directement mesuré par un capteur d'effort 6 axes. Ce capteur peut par exemple être disposé sur une poignée amovible que l'utilisateur dispose à l'endroit souhaité sur la pièce à manipuler, ainsi que cela est décrit dans la demande de brevet précitée, déposée sous la référence FR 11/61402.

Tous types de capteurs peuvent être utilisés, ces capteurs permettant de récupérer un torseur d'effort et le disposer à un autre endroit, sous réserve que le torseur réduit au point de saisie de l'opérateur puisse être déterminé. Des capteurs déportés des moyens de pilotage peuvent notamment être envisagés, par exemple si des moyens de localisation permettent de déterminer la localisation des moyens de pilotage. Les moyens de localisation peuvent par exemple comprendre une centrale inertielle, ou bien des moyens optiques associés à des moyens de traitement appropriés. Dans de tels cas, il est également envisageable qu'aucun moyen de pilotage physique soit utilisé, ou plus précisément que les moyens de pilotage de la pièce à manipuler soient formés par la main ou les mains de l'opérateur : l'opérateur peut par exemple appliquer sa main directement sur la pièce à manipuler, des moyens de localisation adéquats de la main de l'opérateur, associés à des moyens de mesure déportés permettant de déterminer le torseur d'effort réduit au niveau de la main de l'opérateur.

Il est également à observer que les exemples développés précédemment font mention de moyens de pilotage formés par une poignée, mais que d'autres moyens de pilotage peuvent être envisagés, tels que des gants comprenant des capteurs appropriés. En outre, les exemples présentés s'appliquent à des moyens de pilotage disposés en un point de la pièce à manipuler, mais il est également envisageable que les moyens de pilotage soient en pratique disposés en une pluralité de points de la pièce à manipuler, l'opérateur étant alors par exemple capable de manipuler la pièce en faisant usage de ses deux mains. Les torseurs d'effort et cinématique peuvent dans un tel cas être réduit en un point déterminé, par exemple situé au niveau d'un des moyens de pilotage.

## Revendications

1. Procédé d'assistance au pilotage d'un robot (1) comprenant un organe de préhension (13) apte à tenir une pièce (15) à manipuler en un point de préhension (A), par un opérateur agissant sur la pièce (15) en au moins un point de saisie (O), le procédé d'assistance permettant au robot (1) d'exécuter une pluralité de types d'assistance, correspondant à une pluralité de mouvements caractéristiques déterminés de l'organe de préhension (13), le procédé étant **caractérisé en ce qu'**il comprend au moins :
• une première étape (401) de détection de l'intention de l'opérateur déterminant l'intention de l'opérateur d'exécuter un type d'assistance déterminé parmi la pluralité de types d'assistance, à partir d'une analyse d'un torseur d'effort (Tₘₑₛ) et d'un torseur cinématique (Wₘₑₛ) réduits en un point déterminé et de la connaissance d'un type d'assistance courant exécuté par le robot ;
• une seconde étape (403) d'activation d'une assistance que le robot doit exécuter en fonction de l'intention détectée à la première étape, la seconde étape (403) restituant des consignes de contrôle à l'attention du robot (1).

2. Procédé d'assistance au pilotage suivant la revendication 1, **caractérisé en ce que** l'opérateur agit sur la pièce (15) par des moyens de pilotage (100) disposés sur la pièce (15).

3. Procédé d'assistance au pilotage suivant l'une quelconque des revendications précédentes, **caractérisé en ce que** le point déterminé de réduction du torseur d'effort (Tₘₑₛ) et du torseur cinématique (Wₘₑₛ) est situé au niveau du point de saisie (O).

4. Procédé d'assistance au pilotage suivant l'une quelconque des revendications précédentes, **caractérisé en ce qu'**il comprend en outre une étape préalable (400) comprenant la définition d'une pluralité de mouvements de la pièce pouvant être réalisés, la définition des types d'assistance requis pour l'exécution de la pluralité de mouvements, et la définition de contrôleurs générant des consignes de contrôle à appliquer pour l'exécution des types d'assistance définis.

5. Procédé d'assistance au pilotage suivant l'une quelconque des revendications précédentes, **caractérisé en ce que** ladite pluralité de types d'assistance est un groupe comprenant au moins l'un des types d'assistance parmi :
• un premier type d'assistance (UGTA) permettant à l'opérateur d'effectuer un mouvement du côté de la pièce (15) tenu par le robot (1) au point de préhension (A) non coordonné avec un mouvement du côté de la pièce (15) tenu par l'opérateur au point de saisie (O) sans appliquer de couple ;
• un deuxième type d'assistance (CGTA) permettant à l'opérateur d'effectuer un mouvement du côté de la pièce (15) tenu par le robot (1) au point de préhension (A) coordonné avec un mouvement du côté de la pièce (15) tenu par l'opérateur au point de saisie (O) sans appliquer de couple ;
• un troisième type d'assistance (CGRA) permettant à l'opérateur d'effectuer un mouvement de rotation de la pièce (15) ;
• un quatrième type d'assistance (SGRA) permettant à l'opérateur d'effectuer un mouvement en ligne droite de la pièce (15).

6. Procédé d'assistance au pilotage suivant la revendication 5, **caractérisé en ce que** le premier type d'assistance (UGTA) correspond à un mouvement de rotation (R_{O}) de la pièce (15) autour d'une position déterminée du point de saisie (O).

7. Procédé d'assistance au pilotage suivant la revendication 5, **caractérisé en ce que** le deuxième type d'assistance (CGTA) correspond à un mouvement de translation de la pièce (15) selon lequel l'orientation de la pièce (15) demeure parallèle à une position d'origine de la droite passant par le point de saisie (O) et le point de préhension (A).

8. Procédé d'assistance au pilotage suivant la revendication 5, **caractérisé en ce que** le troisième type d'assistance (CGRA) correspond à une rotation de la pièce (15) autour du point de préhension (A).

9. Procédé d'assistance au pilotage suivant la revendication 5, **caractérisé en ce que** le quatrième type d'assistance (SGRA) correspond à un mouvement de translation de la pièce (15) le long de la droite passant par le point de saisie (O) et le point de préhension (A).

10. Procédé d'assistance au pilotage suivant l'une quelconque des revendications précédentes, **caractérisé en ce que** la détection d'intention réalisée à la première étape (401) est basée sur une analyse comparative des valeurs associées aux paramètres physiques contenus dans les torseurs d'effort (Tₘₑₛ) et cinématique (Wₘₑₛ), l'ensemble des paramètres physiques contenus dans les deux torseurs dont les valeurs caractéristiques dépassent les valeurs de seuils respectives correspondantes déterminant l'intention de l'opérateur, en fonction du type d'assistance courant considéré, en référence à une base de données de référence.

11. Procédé d'assistance au pilotage suivant la revendication 10, **caractérisé en ce que** les torseurs d'effort (Tₘₑₛ) et cinématique (Wₘₑₛ) sont établis à partir de mesures intégrées sur une fenêtre temporelle de durée déterminée.

12. Système d'assistance au pilotage d'un robot (1) **caractérisé en ce qu'**il est configuré pour mettre en oeuvre un procédé d'assistance au pilotage suivant l'une quelconque des revendications précédentes.

13. Système suivant la revendication 12, **caractérisé en ce qu'**il comprend des moyens de pilotage (100) comprenant au moins un capteur d'efforts 6 axes permettant la mesure directe du torseur d'effort (Tₘₑₛ) réduit au niveau du point de saisie (O).

14. Système suivant la revendication 8, **caractérisé en ce que** les moyens de pilotage (100) sont formés par une poignée comprenant des moyens de fixation aptes à assurer la fixation de la poignée à la pièce (15).

15. Système suivant l'une quelconque des revendications 13 et 14, **caractérisé en ce que** les moyens de pilotage (100) comprennent en outre une centrale inertielle permettant la mesure directe du torseur cinématique (Wₘₑₛ) réduit au niveau du point de saisie (O).

## Patentansprüche

1. Verfahren zur Unterstützung bei einer Robotersteuerung (1), umfassend ein Greiforgan (13), das geeignet ist, ein zu handhabendes Werkstück (15) durch einen Bediener, der am Werkstück (15) an zumindest einer Berührungsstelle (O) tätig ist, an einer Greifstelle (A) zu halten, wobei das Verfahren zur Unterstützung dem Roboter (1) erlaubt, eine Vielzahl an Unterstützungsarten entsprechend einer Vielzahl festgelegter charakteristischer Bewegungen des Greiforgans (13) auszuführen und wobei das Verfahren **dadurch gekennzeichnet ist, dass** es zumindest die folgenden Schritte umfasst:
• einen ersten Schritt (401) zur Erkennung der Absicht des Bedieners, der die Absicht des Bedieners, eine bestimmte Art der Unterstützung aus der Vielzahl an Unterstützungsarten auszuführen, ausgehend von einer Analyse einer Schraube zweiter Art (Tₘₑₛ) und einer Schraube erster Art (Wₘₑₛ), die an einem bestimmten Punkt reduziert sind, und ausgehend von der Kenntnis einer aktuell vom Roboter ausgeführten Unterstützungsart erkennt;
• einen zweiten Schritt (403) zur Aktivierung einer Unterstützung, die der Roboter je nach der im ersten Schritt erkannten Absicht ausführen soll, wobei der zweite Schritt (403) Prüfvorgaben zur Beachtung durch den Roboter (1) wiedergibt.

2. Verfahren zur Unterstützung bei einer Steuerung nach Anspruch 1, **dadurch gekennzeichnet, dass** der Bediener über Steuermittel (100), die am Werkstück (15) angeordnet sind, auf das Werkstück (15) einwirkt.

3. Verfahren zur Unterstützung bei einer Steuerung nach irgendeinem der vorangehenden Ansprüche, **dadurch gekennzeichnet, dass** der festgelegte Reduktionspunkt der Schraube zweiter Art (Tₘₑₛ) und der Schraube erster Art (Wₘₑₛ) an der Berührungsstelle (O) liegt.

4. Verfahren zur Unterstützung bei einer Steuerung nach irgendeinem der vorangehenden Ansprüche, **dadurch gekennzeichnet, dass** es außerdem einen vorangehenden Schritt (400) zur Definition einer Vielzahl ausführbarer Werkstückbewegungen, zur Definition der für die Ausführung dieser Vielzahl an Bewegungen erforderlichen Unterstützungsarten und zur Definition von Prüfern enthält, die zur Ausführung der festgelegten Unterstützungsarten anzuwendende Prüfvorgaben generieren.

5. Verfahren zur Unterstützung bei einer Steuerung nach irgendeinem der vorangehenden Ansprüche, **dadurch gekennzeichnet, dass** die Vielzahl an Unterstützungsarten eine Gruppe darstellt, die zumindest eine der folgenden Unterstützungsarten umfasst:
• eine erste Unterstützungsart (UGTA), die es dem Bediener erlaubt, aufseiten des Werkstücks (15), das vom Roboter (1) an der Greifstelle (A) gehalten wird, ohne Anwendung eines Moments eine Bewegung auszuführen, die nicht mit einer Bewegung aufseiten des Werkstücks (15), das vom Bediener an der Berührungsstelle (O) gehalten wird, koordiniert ist;
• eine zweite Unterstützungsart (CGTA), die es dem Bediener erlaubt, aufseiten des Werkstücks (15), das vom Roboter (1) an der Greifstelle (A) gehalten wird, ohne Anwendung eines Moments eine Bewegung auszuführen, die mit einer Bewegung aufseiten des Werkstücks (15), das vom Bediener an der Berührungsstelle (O) gehalten wird, koordiniert ist;
• eine dritte Unterstützungsart (CGRA), die es dem Bediener erlaubt, eine Drehbewegung des Werkstücks (15) auszuführen;
• eine vierte Unterstützungsart (SGRA), die es dem Bediener erlaubt, eine geradlinige Bewegung des Werkstücks (15) auszuführen.

6. Verfahren zur Unterstützung bei einer Steuerung nach Anspruch 5, **dadurch gekennzeichnet, dass** die erste Unterstützungsart (UGTA) einer Drehbewegung (Ro) des Werkstücks (15) um eine bestimmte Position der Berührungsstelle (O) entspricht.

7. Verfahren zur Unterstützung bei einer Steuerung nach Anspruch 5, **dadurch gekennzeichnet, dass** die zweite Unterstützungsart (CGTA) einer Fahrbewegung des Werkstücks (15) entspricht, bei der die Ausrichtung des Werkstücks (15) parallel zu einer Referenzposition der Geraden bleibt, die durch die Berührungsstelle (O) und die Greifstelle (A) verläuft.

8. Verfahren zur Unterstützung bei einer Steuerung nach Anspruch 5, **dadurch gekennzeichnet, dass** die dritte Unterstützungsart (CGRA) einer Drehung des Werkstücks (15) rund um die Greifstelle (A) entspricht.

9. Verfahren zur Unterstützung bei einer Steuerung nach Anspruch 5, **dadurch gekennzeichnet, dass** die vierte Unterstützungsart (SGRA) einer Fahrbewegung des Werkstücks (15) entlang der Geraden entspricht, die durch die Berührungsstelle (O) und die Greifstelle (A) verläuft.

10. Verfahren zur Unterstützung bei einer Steuerung nach irgendeinem der vorangehenden Ansprüche, **dadurch gekennzeichnet, dass** die Absichtserkennung, die im ersten Schritt (401) erfolgt, sich auf eine vergleichende Analyse der Werte stützt, die den physikalischen Parametern, die in den Schrauben zweiter (Tₘₑₛ) und erster Art (Wₘₑₛ) enthalten sind, zugeordnet sind, wobei sämtliche physikalische Parameter, die in den beiden Schrauben enthalten sind und deren charakteristische Werte die jeweiligen entsprechenden Grenzwerte überschreiten, die Absicht des Bedieners in Abhängigkeit von der aktuell relevanten Unterstützungsart und unter Bezugnahme auf eine Referenzdatenbank festlegen.

11. Verfahren zur Unterstützung bei einer Steuerung nach Anspruch 10, **dadurch gekennzeichnet, dass** die Schrauben zweiter (Tₘₑₛ) und erster Art (Wₘₑₛ) ausgehend von integrierten Messungen in einem Zeitfenster von festgelegter Dauer bestimmt werden.

12. System zur Unterstützung bei einer Robotersteuerung (1), **dadurch gekennzeichnet, dass** es konfiguriert wird, um ein Verfahren zur Unterstützung bei einer Steuerung nach irgendeinem der vorangehenden Ansprüche umzusetzen.

13. System nach Anspruch 12, **dadurch gekennzeichnet, dass** es Steuermittel (100) umfasst, die zumindest einen 6-Achs-Kraftaufnehmer umfassen, der das direkte Messen der an der Berührungsstelle (O) reduzierten Schraube zweiter Art (Tₘₑₛ) ermöglicht.

14. System nach Anspruch 8, **dadurch gekennzeichnet, dass** die Steuermittel (100) in Form eines Griffs ausgebildet sind, der Befestigungsmittel umfasst, die geeignet sind, die Befestigung des Griffs am Werkstück (15) sicherzustellen.

15. System nach irgendeinem der Ansprüche 13 und 14, **dadurch gekennzeichnet, dass**, die Steuermittel (100) außerdem eine Inertialmesseinheit umfassen, welche die direkte Messung der an der Berührungsstelle (O) reduzierten Schraube erster Art (Wₘₑₛ) ermöglichen.

## Claims

1. A method for assisting the control of a robot (1) comprising a gripping member (13) capable of holding a part (15) to be handled at a gripping point (A) via an operator acting on said part (15) at at least one holding point (O), said assistance method allowing said robot (1) to execute a plurality of types of assistance, corresponding to a plurality of predetermined characteristic movements of said gripping member (13), said method being **characterised in that** it comprises at least:
• a first step (401) of detecting the intention of said operator that determines the intention of said operator to execute a predetermined type of assistance from among the plurality of types of assistance, on the basis of an analysis of a force torsor (Tₘₑₛ) and of a kinematic torsor (Wₘₑₛ) that are reduced at a predetermined point and on the basis of the knowledge of a current type of assistance executed by said robot;
• a second step (403) of activating an assistance that must be executed by said robot as a function of the intention detected during said first step, said second step (403) retrieving control commands intended for said robot (1).

2. The control assistance method according to claim 1, **characterised in that** said operator acts on said part (15) via control means (100) that are disposed on said part (15).

3. The control assistance method according to any one of the preceding claims, **characterised in that** the predetermined point of reduction of said force torsor (Tₘₑₛ) and of said kinematic torsor (Wₘₑₛ) is located at said holding point (O).

4. The control assistance method according to any one of the preceding claims, **characterised in that** it further comprises a prior step (400) comprising the definition of a plurality of movements that can be carried out by said part, the definition of the types of assistance required in order to execute the plurality of movements and the definition of controllers generating control commands to be applied in order to execute defined types of assistance.

5. The control assistance method according to any one of the preceding claims, **characterised in that** said plurality of types of assistance is a group comprising at least one of the following types of assistance:
• a first type of assistance (UGTA) allowing said operator to carry out a movement on the side of said part (15) held by said robot (1) at said gripping point (A) that is not coordinated with a movement on the side of said part (15) held by said operator at said holding point (O), without applying torque;
• a second type of assistance (CGTA) allowing said operator to carry out a movement on the side of said part (15) held by said robot (1) at said gripping point (A) that is coordinated with a movement on the side of said part (15) held by said operator at said holding point (O), without applying torque;
• a third type of assistance (CGRA) allowing said operator to carry out a rotary movement of said part (15);
• a fourth type of assistance (SGRA) allowing said operator to carry out a straight line movement of said part (15).

6. The control assistance method according to claim 5, **characterised in that** said first type of assistance (UGTA) corresponds to a rotation movement (Rₒ) of said part (15) about a predetermined position of said holding point (O).

7. The control assistance method according to claim 5, **characterised in that** said second type of assistance (CGTA) corresponds to a translation movement of said part (15), along which the orientation of said part (15) remains parallel to a home position of the straight line passing through said holding point (O) and said gripping point (A).

8. The control assistance method according to claim 5, **characterised in that** said third type of assistance (CGRA) corresponds to a rotation of said part (15) about said gripping point (A).

9. The control assistance method according to claim 5, **characterised in that** said fourth type of assistance (SGRA) corresponds to a translation movement of said part (15) along the straight line passing through said holding point (O) and said gripping point (A).

10. The control assistance method according to any one of the preceding claims, **characterised in that** the detection of intention carried out during said first step (401) is based on a comparative analysis of the values associated with the physical parameters contained in said force (Tₘₑₛ) and kinematic (Wₘₑₛ) torsors, with all of the physical parameters contained in said two torsors that have characteristic values that exceed the corresponding respective threshold values determining the intention of said operator, as a function of the current considered type of assistance, with reference to a reference database.

11. The control assistance method according to claim 10, **characterised in that** said force (Tₘₑₛ) and kinematic (Wₘₑₛ) torsors are established on the basis of measurements integrated on a time window of predetermined duration.

12. A system for assisting the control of a robot (1), **characterised in that** it is configured to implement a control assistance method according to any one of the preceding claims.

13. The system according to claim 12, **characterised in that** it comprises control means (100) comprising at least one 6-axis force sensor allowing the direct measurement of said force torsor (Tₘₑₛ) that is reduced at said holding point (O).

14. The system according to claim 8, **characterised in that** said control means (100) are formed by a handle comprising attachment means capable of ensuring the attachment of said handle to said part (15).

15. The system according to any one of claims 13 and 14, **characterised in that** said control means (100) further comprise an inertial unit allowing the direct measurement of said kinematic torsor (Wₘₑₛ) that is reduced at said holding point (O).
